# FASCICULE DE BREVET EUROPEEN

(11) **EP 0 499 532 B1**
(45) Date de publication et mention de la délivrance du brevet: **23.07.1997**
(21) Numéro de dépôt: 92400364.3
(22) Date de dépôt: 11.02.1992
(51) Int. Cl.: F16B 5/12, F16B 21/08, F16B 5/06, B60R 13/04, B29C 69/00

(54) **Perfectionnements aux dispositifs pour fixer les enjoliveurs sur les carrosseries ainsi qu'à leurs procédés de mise en oeuvre et de fabrication**
Verbesserungen und Vorrichtungen zur Befestigung von Zierleisten an Fahrzeugkarosserien sowie ihr Verfahren zur Durchführung und Herstellung
Improvements to devices for fastening trims on vehicle bodies and methods for implementation and manufacture

(30) Priorité: 13.02.1991 FR 9101671
(43) Date de publication de la demande: 19.08.1992
(73) Titulaire: COMPAGNIE DE MATERIEL ET D'EQUIPEMENTS TECHNIQUES C.O.M.E.T., F-60304 Senlis Cedex (FR)
(72) Inventeur: Le Blaye, Gérard, F-93100 Montreuil (FR); Bouery, Roger, F-75018 Paris (FR)
(74) Mandataire: Rinuy, Santarelli

(56) Documents cités:
- FR-A- 2 296 549
- FR-A- 2 428 165
- US-A- 3 775 927
- US-A- 4 422 222

## Description

L'invention est relative aux dispositifs destinés à fixer sur les carrosseries ou caisses de véhicules des pièces allongées telles que baguettes d'enjolivement ou bandes de protection tout en étant recouverts par ces pièces -qui seront désignées dans la suite, mais d'une façon bien entendu non limitative, par le mot "enjoliveurs"- de façon à être invisibles de l'extérieur de la caisse après fixation.

Elle vise plus particulièrement, parmi ces dispositifs, ceux qui comportent, d'une part, un pion dont le pied est destiné à coopérer avec un trou non circulaire poinçonné dans la caisse, trou présentant une double symétrie par rapport à respectivement deux axes perpendiculaires entre eux avec une grande dimension ou "longueur" A et une petite dimension ou "largeur" B, et, d'autre part, une plaquette perforée montée sur l'enjoliveur et propre à recevoir de façon amovible la tête dudit pion, le montage de chaque enjoliveur sur la caisse faisant appel à plusieurs pions coopérant avec plusieurs trous alignés de la caisse et avec plusieurs plaquettes montées sur l'enjoliveur et le démontage de chaque enjoliveur faisant intervenir un coulissement relatif de l'ensemble de cet enjoliveur et des plaquettes montées sur lui par rapport à la caisse.

Avec les modes de réalisation connus de ces dispositifs (voir les brevets FRANCE n° 2 621 084 et 2 622 258), il est nécessaire de monter préalablement les pions sur la caisse en prenant soin de donner à chacun d'eux une position angulaire précise, pour pouvoir ensuite monter les plaquettes des enjoliveurs sur les pions : ce montage préalable des pions sur la caisse est long et fastidieux.

De plus, les constructions particulières adoptées respectivement pour les plaquettes et pour les pions, constructions comportant en particulier, sur les plaquettes, des paires de lèvres élastiques parallèles et, sur les pions, des pieds oblongs angulairement décalés de 45°, ne se prêtent pas à des fabrications simultanées de ces plaquettes et pions par moulage.

L'invention a pour but, surtout, de remédier à l'un au moins de ces inconvénients et de préférence à tous.

A cet effet, les dispositifs de fixation selon l'invention sont essentiellement caractérisés en ce que le pied du pion présente deux pattes élastiques symétriques l'une de l'autre par rapport à un plan axial du pion et s'étendant radialement à partir de l'extrémité de ce pied tout en étant repliées obliquement vers la portion centrale du corps du pion, la dimension radiale hors tout de ces pattes étant égale à la largeur du trou pour leur position la plus repliée et comprise entre cette largeur et la longueur du trou pour leur position élastiquement détendue.

Dans des modes de réalisation préférés, on a recours en outre à l'une et/ou à l'autre des dispositions suivantes :
- la tête du pion comprend deux secondes pattes élastiques symétriques l'une de l'autre par rapport à un plan axial du pion et s'étendant radialement selon la même direction que les premières pattes à partir de l'extrémité de cette tête, tout en étant repliées obliquement vers la portion centrale du corps du pion, et chaque plaquette comprend un logement propre à recevoir l'ensemble de ces deux secondes pattes, logement comportant deux rebords rentrants en regard dont l'écartement mutuel e est inférieur à la dimension transversale hors tout E de l'ensemble des deux secondes pattes en leur état normal, ces deux secondes pattes étant agencées de façon telle que leur introduction axiale dans le logement ci-dessus ait pour effet, du fait de leur simple glissement contre lesdits rebords, de les escamoter suffisamment par pliage vers l'axe du pion pour rendre possible leur passage entre ces rebords, la détente élastique radiale subséquente de ces pattes assurant le verrouillage axial du montage,
- le logement de la plaquette selon l'alinéa précédent est bordé par au moins un évidement propre à recevoir la tête du pion par simple déplacement relatif entre la plaquette et le pion, évidement assez large pour que ladite tête puisse en être ensuite extraite par simple translation axiale,
- l'évidement ci-dessus est délimité en partie par deux faces planes dont l'écartement mutuel est égal à l'écartement mutuel e des deux rebords rentrants ci-dessus,
- la portion, du pion, qui est destinée à se trouver axialement au niveau du bord du trou qui le reçoit, comprend une première aile propre à prendre appui angulairement dans un premier sens par arc-boutement contre un tronçon dudit bord et une seconde aile propre à prendre appui latéralement dans le sens angulaire inverse du précédent contre un autre tronçon dudit bord, de façon à permettre un positionnement angulaire précis du pion par rapport au trou, les deux ailes en question étant automatiquement escamotables par pliage vers l'axe du pion lorsqu'on déplace angulairement le pion dans le trou dans le second sens défini ci-dessus.

En ce point de la description, il convient de signaler qu'un pion d'assemblage amovible présentant certaines analogies avec celui ci-dessus défini a été décrit dans le brevet US-4 422 222.

Ce pion présente respectivement à ses deux extrémités axiales deux paires de pattes élastiques orientées axialement en sens inverse et propres à coopérer respectivement avec les bords de deux trous coaxiaux non circulaires évidés respectivement dans une pièce à fixer et son support.

Mais on ne trouve pas dans ce document d'équivalent aux plaquettes transversalement coulissantes ci-dessus : les trous de fixation -qui sont évidés notamment dans une grille de radiateur de véhicule et dans son support- demeurent coaxiaux en permanence et le démontage du pion exige une torsion de 90° de l'une de ses extrémités par rapport à l'autre, torsion effectuée à l'aide d'un tournevis.

L'invention vise également les procédés de mise en oeuvre des dispositifs de fixation du genre ci-dessus, procédés qui sont essentiellement caractérisés par la suite des étapes suivantes : après avoir poinçonné dans la caisse une suite de trous non circulaires alignés, on monte sur l'enjoliveur à fixer des plaquettes perforées telles que définies ci-dessus dans chacune desquelles est montée la tête d'un pion de fixation tel que défini ci-dessus, les écartements des axes des différents pions étant identiques à ceux des axes des trous poinçonnés, on dispose l'enjoliveur ainsi équipé en regard de la caisse de façon telle que les axes des pions coïncident avec ceux des trous et on applique l'enjoliveur contre la caisse, ce qui introduit automatiquement les pieds des pions dans les trous poinçonnés, la détente élastique des premières pattes après leur traversée desdits trous assurant le verrouillage du montage.

L'invention comprend, mises à part des dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins annexés d'une manière bien entendu non limitative.

Les figures 1, 2 et 3, de ce dessin, montrent à une échelle agrandie, respectivement en bout, en coupe transversale selon II-II, figure 1, et en vue de côté selon la flèche III de la figure 1, un dispositif de fixation établi selon l'invention tel qu'il se présente à la sortie de son moule de fabrication.

La figure 4 montre le même dispositif selon une coupe transversale comparable à celle de la figure 2, après introduction axiale du pion dans la plaquette.

La figure 5 montre, encore à une échelle agrandie, un trou poinçonné propre à recevoir le pied du pion ci-dessus.

La figure 6 montre à une échelle un peu réduite, en coupe transversale, l'ensemble d'un pion monté sur la tôle, et de la plaquette en regard montée sur un enjoliveur à fixer sur ladite tôle.

Les figures 7 et 8 montrent le pion ci-dessus à une échelle plus grande que celle des premières figures, respectivement en coupe axiale et en coupe transversale selon VIII-VIII figure 7.

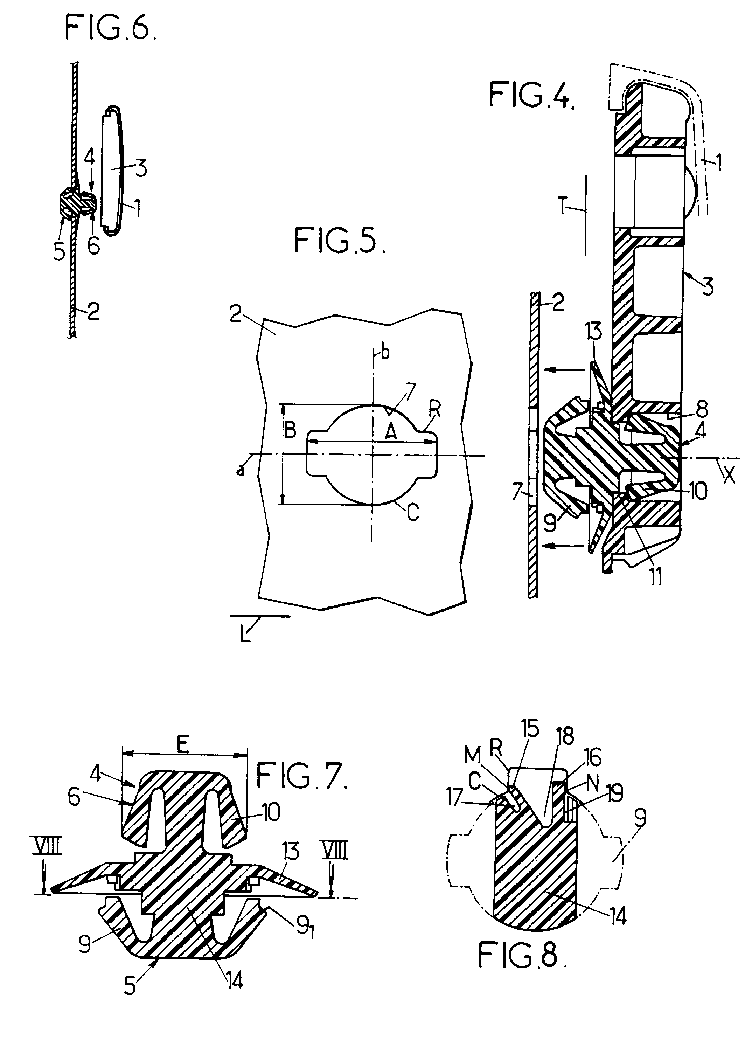

Le dispositif de fixation ici considéré, destiné à fixer un enjoliveur 1 (figure 6) sur une caisse 2 de véhicule comprend :
- une plaquette perforée 3 montée par coulissement dans l'enjoliveur 1,
- et un pion 4 présentant un corps 14, un pied 5 et une tête 6.

Le pied 5 et la tête 6 sont propres à coopérer respectivement :
- avec un trou non circulaire 7 évidé dans la tôle 2,
- et avec un logement 8 prévu dans la plaquette 3.

Le trou 7 présente une forme doublement symétrique par rapport à respectivement deux axes :
- l'un a correspondant à la grande dimension ou longueur A du trou,
- et l'autre b correspondant à la petite dimension ou largeur B dudit trou.

Dans le mode de réalisation illustré sur la figure 5, la forme en question correspond à un cercle C de diamètre B prolongé radialement par deux oreilles R dont la plus grande dimension est égale à A.

Le pied 5 du pion comprend deux pattes élastiques 9 -dites "premières pattes" ci-après- qui s'étendent radialement selon une direction transversale T à partir de l'extrémité de ce pied et qui sont repliées obliquement à environ 45° sur l'axe X du pion, vers la portion centrale du corps 14 de ce pion.

Ces pattes 9 sont élastiquement flexibles autour de leurs lignes de pliage situées près de l'extrémité du pied.

La direction T est perpendiculaire à la fois à l'axe du pion et à la direction longitudinale L de l'enjoliveur lorsque le pion est monté sur une plaquette 3 elle-même montée sur cet enjoliveur.

Le contour, des pattes 9, projeté sur un plan perpendiculaire à l'axe du pion, est tel que ces pattes puissent traverser sans déformation les oreilles R de chaque trou 7 lorsque la direction T est orientée parallèlement à la longueur A de ce trou, mais non le cercle C lorsque cette direction T est orientée parallèlement à la largeur B dudit trou.

Mais les pattes 9 sont conçues de façon telle que, dans ce dernier cas, leur introduction axiale dans le trou 7 à partir de l'extérieur de la caisse 2, ait pour effet, du fait du simple glissement des pattes contre les bords rapprochés du trou correspondant à sa largeur B, d'escamoter suffisamment lesdites pattes par pliage vers l'axe X du pion pour que soit possible leur traversée axiale dudit trou, la détente élastique radiale des pattes après la traversée en question assurant le verrouillage axial du montage.

Avec une telle configuration du pied 5 du pion 4, la fixation de l'enjoliveur 1, que l'on suppose s'étendre horizontalement, sur la caisse 2, est très simplement obtenue de la façon suivante.

On commence par poinçonner dans ladite caisse une suite de trous 7 alignés horizontalement, en orientant horizontalement leurs longueurs A.

Puis on monte sur l'enjoliveur une suite de plaquettes 3 portant chacune un pion 4 d'une manière qui sera précisée plus loin, avec des entraxes identiques à ceux des trous poinçonnés dans la caisse 2.

Il suffit ensuite de disposer l'enjoliveur, avec sa direction longitudinale L horizontale, en regard de la suite de trous 7, puis d'appliquer cet enjoliveur contre la caisse, ce qui fait pénétrer les pattes 9 dans lesdits trous 7, avec déformation élastique verticale de celles-ci par pliage dû à leur glissement contre les bords rapprochés du trou 7 correspondant à sa largeur B.

A la fin de cette introduction, les pattes 9 se détendent élastiquement, en prenant alors appui axialement contre le bord du trou 7, ce qui assure le verrouillage du montage.

Le mode de montage qui vient d'être indiqué est particulièrement intéressant en ce qu'il permet d'éviter la nécessité de monter les pions dans les trous 7 de la caisse avant la présentation de l'enjoliveur garni de ses plaquettes en regard de cette caisse.

En d'autres termes, le montage est effectué en une seule opération au lieu de deux, ce qui conduit à un gain de temps considérable.

Il est à noter que le montage de chaque pion 4 sur la caisse 2 est facilement amovible.

En effet, lorsque l'enjoliveur est détaché des têtes de ses pions, d'une manière qui sera précisée plus loin, il suffit de faire tourner chaque pion de 90° de façon à amener ses pattes 9 en regard des oreilles R, lesdites pattes pouvant alors traverser librement lesdites oreilles selon la direction axiale X du pion.

On va maintenant décrire un mode de réalisation préféré du montage de la tête 6 de chaque pion dans le logement 8 correspondant de la plaquette 3.

Ladite tête 6 comprend deux pattes élastiques 10 -dites "secondes pattes" ci-après- qui s'étendent radialement selon la direction transversale T, à partir de l'extrémité de ladite tête, et sont repliées obliquement sur l'axe X du pion, vers la portion centrale du corps 14 de ce pion, l'angle d'inclinaison desdites pattes sur ledit axe étant ici un peu inférieur à 45° et par exemple de l'ordre de 20 à 30°.

Les extrémités de ces pattes sont propres à coagir avec des rebords rentrants 11 qui délimitent l'ouverture extérieure du logement 8, c'est-à-dire son ouverture qui est disposée du côté du pion 4 à recevoir.

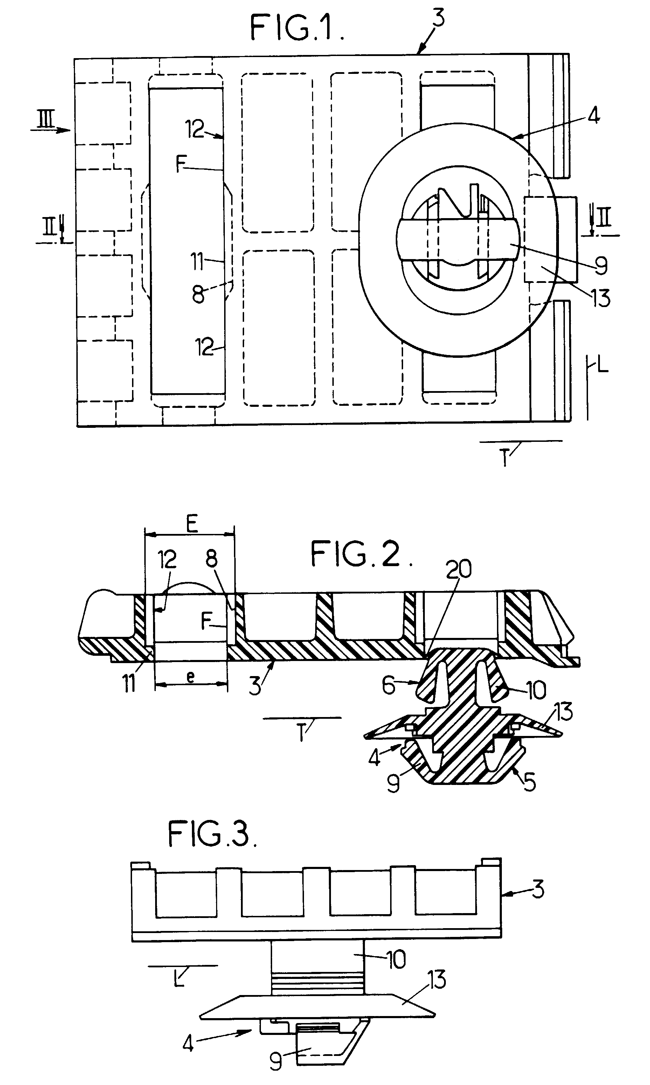

L'écartement mutuel e de ces deux rebords 11 est un peu inférieur à la dimension hors tout E des pattes 10 en leur état normal selon la direction T (voir figures 1 et 7).

Ces secondes pattes 10 sont agencées de façon telle que leur introduction axiale dans le logement 8 ait pour effet, du fait de leur simple glissement contre les rebords 11, de les escamoter suffisamment par pliage vers l'axe du pion pour rendre possible leur passage entre ces rebords, la détente élastique radiale subséquente de ces pattes 10 assurant ensuite le verrouillage axial du montage du pion dans la plaquette.

Le logement 8 évidé dans la plaquette 3 est bordé, selon la direction longitudinale L de l'enjoliveur lorsque la plaquette est montée sur celui-ci, par au moins un évidement 12 (figure 1) propre à recevoir la tête 6 du pion 4 par simple déplacement relatif entre plaquette et pion selon ladite direction L, ladite tête pouvant être extraite par simple translation axiale dudit évidement 12.

Dans un mode de réalisation préféré, l'évidement 12 est délimité en partie par deux faces planes longitudinales axiales F dont l'écartement mutuel est égal à l'écartement mutuel e des deux rebords rentrants 11.

Dans ces conditions, pour dégager la plaquette 3 -et donc l'enjoliveur 1 monté sur elle- de la tête 6 du pion correspondant, il suffit de déplacer légèrement cette plaquette 3 selon la direction L de façon telle que cette tête 6 passe du logement 8 à l'évidement 12 ou plus précisément que l'évidement 12 vienne coiffer ladite tête.

Il suffit alors d'écarter la plaquette de la caisse 2 pour assurer le dégagement en question.

Il est à noter que le logement 8 est plus large que l'évidement 12 selon la direction T.

C'est là une mesure qui permet de positionner naturellement les têtes 6 des pions 4 dans les plaquettes correspondantes 3, seules des interventions volontaires rendant possibles leurs séparations ultérieures.

Comme visible sur la figure 1, il peut être avantageux de prévoir deux évidements 12 de part et d'autre du logement 8 selon la direction L, ce qui permet de démonter l'enjoliveur 1 en faisant subir à celui-ci un premier déplacement horizontal selon l'un ou l'autre des deux sens possibles de ce déplacement.

Comme visible sur les figures, le pion 4 comprend dans sa zone centrale une collerette 13 en forme de coupelle dont la concavité est orientée vers le pied 5 : l'ensemble est dessiné de façon telle que le bord de cette coupelle 13 vienne reposer contre la caisse 2 juste au moment où les pattes 9 se détendent élastiquement à la fin de leur traversée de montage du trou 7 correspondant.

Ainsi, lorsque le montage est achevé, la tôle constituant la caisse est serrée élastiquement entre les pattes 9 et la coupelle 13, et le pion 4 est donc solidement fixé, sans jeu, sur cette tôle.

Comme exposé ci-dessus, le montage du pion sur la caisse est obtenu très facilement par simple poussée axiale de ceux-ci, préalablement monté sur leurs plaquettes respectives, dans les trous poinçonnés de la caisse et il est ensuite facile de séparer :
- des têtes de ces pions, les plaquettes -et l'enjoliveur qu'elles équipent- par un simple déplacement en L ou en baïonnette de cet enjoliveur,
- et de la caisse, les pions par une simple rotation de 90° de ceux-ci suivie d'une translation axiale.

Il est possible également de remonter ces pions isolément sur la caisse, après leur démontage, par une nouvelle poussée axiale analogue à la précédente, le montage des plaquettes -et de l'enjoliveur- sur ces pions se faisant alors ensuite également par de simples poussées axiales analogues aux précédentes, chacune desdites poussées axiales se traduisant par un rapprochement élastique momentané de deux pattes 9 ou 10 suivi de leur détente élastique assurant un verrouillage à la façon d'un déclic.

Lors d'un tel remontage isolé des pions sur la caisse, il importe de pouvoir positionner angulairement avec précision lesdits pions sur ladite caisse.

Pour obtenir un tel positionnement précis, on fait comprendre avantageusement à la partie centrale, du corps 14 du pion, qui se trouve au niveau des bords des trous 7 en fin de montage, des ailes ou pattes s'étendant transversalement vers l'extérieur à partir dudit corps, ailes propres à venir angulairement en butée contre des tronçons particuliers desdits bords et à pouvoir être escamotées par flexion pour l'un des deux sens possibles de déplacement angulaire du pion par rapport à la tôle.

De telles ailes sont en particulier :
- une première aile 15 (figure 8) agencée de façon à prendre appui angulairement avec un effet d'arc-boutement contre une portion M, d'une oreille R du trou 7, voisine de sa zone de raccordement au cercle C correspondant, ladite portion M formant une sorte de coin d'accrochage pour ladite aile 15,
- et une seconde aile 16 agencée de façon à prendre appui de côté contre l'autre portion M, de l'oreille R ci-dessus, qui est raccordée au cercle C.

Les deux ailes 15 et 16 sont entourées, aussi bien axialement qu'angulairement, de tous dégagements désirables tels que 17,18,19, permettant leur flexion autour de leurs racines.

Ces flexions sont automatiquement réalisées lorsque le pion 4 est sollicité angulairement dans un sens donné qui est celui correspondant au démontage du pion et qui est avantageusement celui du "dévissage" de ce pion considéré comme étant saisi par sa tête, extérieure à la caisse et seule accessible : les flexions en question permettent d'escamoter radialement les deux ailes suffisamment pour rendre possibles les déplacements angulaires en question, alors qu'au contraire de tels déplacements angulaires en sens inverse sont interdits du fait de l'arc-boutement de l'aile 15 contre la plage M.

Cette mesure permet d'obtenir un positionnement angulaire sensitif précis du pion 4 dans le trou 7 lorsque ce pion est remonté dans un tel trou isolément, c'est-à-dire indépendamment de son montage préalable sur une plaquette 3 : en effet, si l'aile 15 interdit les "vissages" du pion 4 à partir de la position angulaire qu'il occupe lorsqu'il est correctement monté sur la caisse, l'aile 16 offre une légère résistance au début de chaque "dévissage" de ce pion, sans pour autant l'interdire.

La construction très particulière du pion 4, comprenant quatre pattes élastiquement flexibles 9 et 10 s'étendant toutes radialement selon une même direction T facilite l'obtention de ce pion par moulage.

Il est avantageux, selon une disposition particulière de l'invention, de fabriquer lors d'un tel moulage à la fois un tel pion 4 et une plaquette 3 de réception de ce pion, ledit pion étant placé en une position axialement décalée par rapport à ladite plaquette, ainsi que bien visible sur les figures 2 et 3 et étant alors raccordé à celles-ci par des pontets visibles en 20 sur la figure 2 et moulés avec les deux pièces.

Ces pontets sont prévus suffisamment minces pour pouvoir être très facilement cassés par simple poussée axiale du pion 4 dans le sens correspondant à l'introduction de ses pattes 10 dans le logement 8 en regard moyennant une déformation élastique de ces pattes lors de leur passage entre les deux rebords 11, passage immédiatement suivi de la détente radiale élastique desdites pattes assurant le verrouillage axial du montage, ainsi que décrit plus haut.

Cette mesure facilite grandement la fabrication puisqu'une seule opération de moulage est nécessaire pour l'obtention du pion 4 et de la plaquette 3 avec laquelle il coopère.

Comme illustré sur les dessins, la plaquette peut comprendre plusieurs ensembles parallèles de logements 8 associés à au moins un évidement 12 adjacent : on prévoit de préférence deux tels ensembles pour chaque plaquette, coopérant chacun avec un pion 4, les deux pions correspondants étant alors obtenus de moulage simultanément avec ladite plaquette 3.

Le matériau constitutif des pions 4 et plaquettes 3 est de préférence un matériau synthétique tel qu'une résine acétal.

Il est à noter que, aussi bien pour les pattes 9 que pour les pattes 10, il est avantageux de limiter l'écartement élastique de celles-ci par pliage juste après le déclic correspondant à leur mise en place, de façon à obtenir un serrage axial permanent du support rétréci concerné (caisse 2 ou plaquette 3) entre ces pattes et le corps 14 du pion ou la coupelle 13 qui prolonge ce corps en l'entourant.

Cette limitation est assurée automatiquement pour les pattes 10 par des faces internes des logements 8 (voir figure 4).

Pour les pattes 9, aucune butée transversale n'étant disponible du côté non accessible de la caisse 2, on assure la limitation en question en prévoyant des crantages 9₁ (figure 7) sur les extrémités libres de ces pattes elles-mêmes.

Ainsi, l'escamotage élastique de ces pattes concerne exclusivement la crête des crans considérés 9₁ et la détente qui suit le montage à déclic a pour effet de faire coopérer avec le bord du trou 7 poinçonné dans la caisse 2 les parties rentrantes desdits crans : on observe alors un effet d'arc-boutement élastique desdites pattes contre lesdits bords, lequel interdit l'expansion ultérieure de ces pattes.

On notera également la forme du type tronconique à angles arrondis de la face extérieure du pied 9 : cette forme est avantageuse en ce qu'elle permet de compenser dans une certaine mesure les erreurs d'entraxes entre les trous poinçonnés 7, puisqu'il est possible d'assurer un recentrage relatif entre chaque pion et chaque trou par glissement de portées inclinées dudit pion contre le bord d'un tel trou, lors du montage de l'enjoliveur 3 sur la caisse 2.

En suite de quoi, et quel que soit le mode de réalisation adopté, on obtient finalement un dispositif de fixation dont la constitution, la mise en oeuvre et la fabrication résultent suffisamment de ce qui précède.

Ce dispositif présente de nombreux avantages par rapport à ceux antérieurement connus, notamment en ce qui concerne la simplicité de la mise en oeuvre, et, dans les modes de réalisations préférés, la simplicité de la fabrication.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Dispositif dans une caisse (2) de véhicule pour fixer un enjoliveur (1), comportant, d'une part, un pion (4) dont le pied (5) est destiné à coopérer avec un trou non circulaire (7) poinçonné dans la caisse, trou présentant une double symétrie par rapport à respectivement deux axes perpendiculaires entre eux avec une grande dimension ou "longueur" (A) et une petite dimension ou "largeur" (B), et, d'autre part, une plaquette perforée (3) montée sur l'enjoliveur et propre à recevoir de façon amovible la tête (6) du dit pion, caractérisé en ce que le pied (5) du pion (4) présente deux pattes élastiques (9) symétriques l'une de l'autre par rapport à un plan axial du pion et s'étendant radialement à partir de l'extrémité de ce pied tout en étant repliées obliquement vers la portion centrale du corps (14) du pion, la dimension radiale hors tout de ces pattes (9) étant égale à la largeur (B) du trou pour leur position la plus repliée et comprise entre cette largeur et la longueur (A) du trou pour leur position élastiquement détendue.

2. Dispositif de fixation selon la revendication 1, caractérisé en ce que les extrémités des pattes élastiques (9) sont munies de crantages (9₁) dont les portions en creux sont propres à coopérer par arc-boutement avec les bords des trous en fin de montage.

3. Dispositif de fixation selon l'une quelconque des revendications 1 et 2, caractérisé en ce que la tête (6) du pion (4) comprend deux secondes pattes élastiques (10) symétriques l'une de l'autre par rapport à un plan axial du pion et s'étendant radialement selon la même direction que les premières pattes (9) à partir de l'extrémité de cette tête, tout en étant repliées obliquement vers la portion centrale du corps (14) du pion, et en ce que chaque plaquette (3) comprend un logement (8) propre à recevoir l'ensemble de ces deux secondes pattes (10), logement comportant deux rebords rentrants (11) en regard dont l'écartement mutuel e est inférieur à la dimension transversale hors tout E de l'ensemble des deux secondes pattes (10) en leur état normal, ces deux secondes pattes étant agencées de façon telle que leur introduction axiale dans le logement ci-dessus (8) ait pour effet, du fait de leur simple glissement contre lesdits rebords, de les escamoter suffisamment par pliage vers l'axe du pion pour rendre possible leur passage entre ces rebords, la détente élastique radiale subséquente de ces pattes assurant le verrouillage axial du montage.

4. Dispositif de fixation selon la revendication 3, caractérisé en ce que le logement (8) de la plaquette (3) est bordé par au moins un évidement (12) propre à recevoir la tête (6) du pion (4) par simple déplacement relatif entre la plaquette et le pion, évidement assez large pour que ladite tête puisse en être ensuite extraite par simple translation axiale.

5. Dispositif de fixation selon la revendication 4, caractérisé en ce que l'évidement (12) est délimité en partie par deux faces planes (F) dont l'écartement mutuel est égal à l'écartement mutuel e des deux rebords rentrants (11).

6. Dispositif de fixation selon l'une quelconque des revendications précédentes, caractérisé en ce que la portion, du pion (4), qui est destinée à se trouver axialement au niveau du bord du trou qui le reçoit, comprend une première aile (15) propre à prendre appui angulairement dans un premier sens par arc-boutement contre un tronçon (M) dudit bord et une seconde aile (16) propre à prendre appui latéralement dans le sens angulaire inverse du précédent contre un autre tronçon (N) dudit bord, de façon à permettre un positionnement angulaire précis du pion par rapport au trou, les deux ailes en question étant automatiquement escamotables par pliage vers l'axe du pion lorsqu'on déplace angulairement le pion dans le trou dans le second sens défini ci-dessus.

7. Procédé de mise en oeuvre d'un dispositif de fixation selon l'une quelconque des précédentes revendications, caractérisé par la suite des étapes suivantes : après avoir poinçonné dans la caisse (2) une suite de trous non circulaires (7) alignés, on monte sur l'enjoliveur (1) à fixer des plaquettes perforées (3) telles que définies ci-dessus dans chacune desquelles est montée la tête d'un pion de fixation (4) tel que défini ci-dessus, les écartements des axes des différents pions étant identiques à ceux des axes des trous poinçonnés, on dispose l'enjoliveur ainsi équipé en regard de la caisse de façon telle que les axes des pions coïncident avec ceux des trous et on applique l'enjoliveur contre la caisse, ce qui introduit automatiquement les pieds (5) des pions dans les trous poinçonnés, la détente élastique des premières pattes (9) après leur traversée des dits trous assurant le verrouillage du montage.

## Patentansprüche

1. Vorrichtung an einer Fahrzeugkarosserie zum Befestigen einer Zierleiste mit, einerseits, einem Zapfen (4), von dem der Fuß (5) bestimmt ist, mit einem nicht kreisförmigen Loch zusammenzuarbeiten, das in die Karosserie gestanzt ist, wobei das Loch eine doppelte Symmetrie bezüglich jeweils zwei untereinander senkrechten Achsen mit einer großen Abmessung oder "Länge" (A) und einer kleinen Abmessung oder "Breite" (B) aufweist, und, andererseits, einem gelochten Plättchen, das auf der Zierleiste montiert ist und geeignet ist, auf entfernbare Weise den Kopf (6) des Zapfens aufzunehmen, dadurch gekennzeichnet, daß der Fuß (5) des Zapfens (4) zwei elastische Lappen (9) aufweist, die zueinander bezüglich einer axialen Ebene des Zapfens symmetrisch sind und sich vom Ende dieses Fußes aus radial erstrecken, wobei sie schräg bezüglich des zentralen Abschnittes des Körpers (14) des Zapfens zurückgefaltet sind, wobei die äußerlich all dieser Lappen (9) gemessene radiale Abmessung in ihrer am weitesten zurückgefalteten Position gleich der Breite (B) des Loches ist und in ihrer elastisch entspannten Position zwischen dieser Breite und der Länge (A) des Loches enthalten ist.

2. Vorrichtung zum Befestigen gemäß Anspruch 1, dadurch gekennzeichnet, daß die Enden der elastischen Lappen (9) mit Rasten (9₁) versehen sind, von denen die vertieften Teile geeignet sind, durch Verklemmung mit den Rändern der Löcher am Ende der Montage zusammenzuwirken.

3. Vorrichtung zum Befestigen gemäß irgendeinem der Ansprüche 1 und 2, dadurch gekennzeichnet, daß der Kopf (6) des Zapfens (4) zwei zweite elastische Lappen (10) aufweist, die zueinander symmetrisch bezüglich einer axialen Ebene des Zapfens sind und sich radial entlang derselben Richtung wie die ersten Lappen (9) vom Ende dieses Kopfes aus erstrecken, wobei sie schräg zum zentralen Teil des Körpers (14) des Zapfens geneigt sind, und daß jedes Plättchen (3) eine Unterbringung (8) aufweist, die geeignet ist, die Gesamtheit dieser beiden zweiten Lappen (10) aufzunehmen, wobei die Unterbringung zwei einspringende Ränder (11) aufweist, von denen der gegenseitige Abstand e kleiner als die gesamte äußerlich gemessene Querabmessung E der Gesamtheit der beiden zweiten Laschen (10) in ihrem Normalzustand ist, wobei diese zwei zweiten Laschen auf eine Weise angeordnet sind, daß ihr axiales Einführen in die obige Unterbringung (8) aufgrund ihres einfachen Gleitens über die Ränder zur Folge hat, daß sie ausreichend durch Biegen zur Achse des Zapfens eingezogen werden, um ihren Durchgang zwischen den Rändern möglich zu machen, wobei das folgende radiale elastische Entspannen dieser Lappen die axiale Verriegelung des Zusammenbaus sicherstellt.

4. Vorrichtung zum Befestigen gemäß Anspruch 3, dadurch gekennzeichnet, daß die Unterbringung (8) des Plättchens (3) von zumindest einer Aussparung (12) eingefaßt ist, die geeignet ist, den Kopf (6) des Zapfens (4) durch einfaches relatives Verschieben zwischen dem Plättchen und dem Zapfen aufzunehmen, wobei die Aussparung genügend breit ist, damit der Kopf dann daraus durch einfache axiale Verschiebung herausgezogen werden kann.

5. Vorrichtung zum Befestigen gemäß Anspruch 4, dadurch gekennzeichnet, daß die Aussparung (12) teilweise von zwei ebenen Seiten (F) begrenzt ist, von denen der gegenseitige Abstand gleich dem gegenseitigen Abstand e der beiden einspringenden Ränder (11) ist.

6. Vorrichtung zum Befestigen gemäß irgendeinem der vorstehenden Ansprüche, dadurch gekennzeichnet, daß der Teil des Zapfens (4), der bestimmt ist, sich axial auf dem Niveau des Randes des Loches, welches diesen aufnimmt, zu befinden, einen ersten Flügel (15) aufweist, der geeignet ist, winklig in einem ersten Sinn durch Verklemmung zwischen einem Abschnitt (M) des Randes zur Anlage zu kommen und einen zweiten Flügel (16), der geeignet ist, seitlich in umgekehrter Winkelrichtung der vorstehenden gegen einen anderen Abschnitt (N) des Randes zur Anlage zu kommen, auf eine Weise, um eine genaue winklige Anordnung des Zapfens bezüglich des Loches zu ermöglichen, wobei die beiden fraglichen Flügel automatisch durch Falten zur Achse des Zapfens einziehbar sind, wenn man den Zapfen winklig in dem Loch im zweiten oben definierten Sinn verlagert.

7. Verfahren zum Anwenden einer Vorrichtung zum Befestigen gemäß irgendeinem der vorstehenden Ansprüche, gekennzeichnet durch die Folge der folgenden Schritte: nachdem man in die Karosserie (2) eine Folge von ausgerichteten, nicht kreisrunden Löchern (7) gestanzt hat, montiert man auf der zu befestigenden Zierleiste (1) gelochte Plättchen (3), wie sie oben definiert worden sind, wobei in jeder von diesen der Kopf eines Zapfens zum Befestigen (4) montiert ist, wie er oben definiert worden ist, wobei die Abstände der Achsen der verschiedenen Zapfen identisch mit denjenigen der Achsen der gestanzten Löcher sind, man ordnet die so ausgerüstetete Zierleiste bezüglich der Karosserie so an, daß sich die Achsen der Zapfen mit denjenigen der Löcher decken und man bringt die Zierleiste an der Karosserie an, wodurch automatisch die Füße (5) der Zapfen in den gestanzten Löchern eingeführt werden, wobei das elastische Entspannen der ersten Lappen (9) nach ihrem Durchgang durch die Löcher die Verriegelung des Zusammenbaus sicherstellt.

## Claims

1. Device in a vehicle body (2) for fixing a trim (1), comprising, on the one hand, a stud (4) the foot (5) of which is intended to cooperate with a non-circular hole (7) punched in the body, which hole has double symmetry respectively about two mutually perpendicular axes with a large dimension or "length" (A) and a small dimension or "width" (B), and, on the other hand, a perforated plate (3) mounted on the trim and suitable to detachably receive the head (6) of the said stud, characterised by the fact that the foot (5) of the stud (4) has two elastic clips (9) symmetrical with each other about an axial plane of the stud and extending radially from the end of this foot while being bent obliquely towards the central portion of the body (14) of the stud, the overall radial dimension of these clips (9) being equal to the width (B) of the hole in their most bent back position and between this width and the length (A) of the hole in their elastically expanded position.

2. Fixing device as described in claim 1, characterised by the fact that the ends of the elastic clips (9) are provided with notchings (9₁) the hollowed out portions of which are suitable to cooperate by jamming with the edges of the holes after assembly.

3. Fixing device as described in either of claims 1 or 2, characterised by the fact that the head (6) of the stud (4) comprises two second elastic clips (10) symmetrical with each other about an axial plane of the stud and extending radially in the same directions as the first clips (9) from the end of this head, while being bent obliquely towards the central portion of the body (14) of the stud, and by the fact that each plate (3) has a housing (8) suitable to receive the whole of these two second clips (10), which housing includes two facing inwardly extending flanges (11) the mutual spacing e of which is smaller than the overall transversal dimension E of the whole of the two second clips (10) in their normal state, these two second clips being so arranged that their axial introduction into the above housing (8) has the effect, as a result of their simple sliding against the said flanges, of occluding them sufficiently by bending them towards the axis of the stud to make possible their passage between these flanges, the subsequent elastic radial expansion of these clips ensuring the axial locking of the assembly.

4. Fixing device as described in claim 3, characterised by the fact that the housing (8) of the plate (3) is bordered by at least one recess (12) suitable to receive the head (6) of the stud (4) by simple relative displacement between the plate and the stud, which recess is sufficiently wide for the said head to then be extractable from it by simple axial translation.

5. Fixing device as described in claim 4, characterised by the fact that the recess (12) is partially defined by two flat surfaces (F) the mutual spacing of which is equal to the mutual spacing e of the two inwardly extending flanges (11).

6. Fixing device as described in any one of the preceding claims, characterised by the fact that the portion of the stud (4) which is intended to be axially level with the edge of the hole which receives it comprises a first vane (15) suitable to bear angularly in a first direction by jamming against a section (M) of the said edge and a second vane (16) suitable to bear laterally in the opposite angular direction to the latter against another section (N) of the said edge, so as to permit precise angular positioning of the stud relative to the hole, the two vanes in question being automatically retractable by bending towards the axis of the stud when the stud is shifted angularly in the hole in the second direction defined above.

7. Process for using a fixing device as described in any one of the preceding claims, characterised by the following series of steps: after a series of aligned non-circular holes (7) has been punched in the body (2), on the trim (1) to be fixed are mounted perforated plates (3) such as defined above in each of which is mounted the head of a fixing stud (4) as defined above, the spacings of the axes of the different studs being identical to those of the axes of the punched holes, the trim thus equipped is arranged opposite the body so that the axes of the studs coincide with those of the holes and the trim is applied against the body, which automatically introduces the feet (5) of the studs into the punched holes, the elastic expansion of the first clips (9) locking the assembly after they have passed through the said holes.
